(19) Europäisches Patentamt

European Patent Office

Office européen des brevets

(11) **EP 4 641 567 A1**

(12) # EUROPEAN PATENT APPLICATION

(43) Date of publication:
**29.10.2025 Bulletin 2025/44**

(21) Application number: **24382457.0**

(22) Date of filing: **25.04.2024**

(51) International Patent Classification (IPC):
**G10L 25/60** (2013.01)   **G10L 25/63** (2013.01)
**G06F 40/10** (2020.01)   **G06F 40/20** (2020.01)
**G06F 40/30** (2020.01)   **G10L 25/87** (2013.01)

(52) Cooperative Patent Classification (CPC):
**G10L 25/60; G10L 25/63;** G06F 40/20; G06F 40/30;
G10L 25/87

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **BTS Technology Services, S.A.**
**50001 Zaragoza (ES)**

(72) Inventors:
• **RIBAS GONZALEZ, Dayana**
**50001 ZARAGOZA (ES)**
• **ORTEGA GIMENEZ, Alfonso**
**50001 ZARAGOZA (ES)**

• **LLEIDA SOLANO, Eduardo**
**50001 ZARAGOZA (ES)**
• **MIGUEL ARTIAGA, Antonio**
**50001 ZARAGOZA (ES)**
• **GUILLEN CIVERA, Luis**
**50001 ZARAGOZA (ES)**
• **NAVARRO MARTÍNEZ, Juan Antonio**
**50001 ZARAGOZA (ES)**
• **CASTEJON SANCHEZ, Jose Javier**
**50001 ZARAGOZA (ES)**
• **BENAVENTE MAINER, Luis**
**50001 ZARAGOZA (ES)**

(74) Representative: **Ungria López, Javier**
**Avda. Ramón y Cajal, 78**
**28043 Madrid (ES)**

(54) ## SYSTEM AND METHOD FOR VOICE SIGNAL ANALYTIC ON TELEPHONE CALLS

(57)    A method for analyzing voice signals on telephone calls to assess the quality of telecommunication services comprehensively is disclosed. The method comprises the preprocessing stage (100), the metrics computation stage (200), the tagging stage (300). The metrics computation stage (200) is based on dialogue-related aspects of the conversation among speakers, the acoustic quality of the voice signal, and paralinguistic aspects of the speech segments within the voice signal. Optionally, the method comprises establishing alarms (400) and generating comprehensive reports (500). It is a multiple channel and speaker telephone conversation-oriented method that is language independent. This voice signal evaluation allows the online monitoring, including speech and non-speech segments during calls, as well as the offline retrospective evaluation of the telecommunication service segmented by criteria such as geographical regions or call center.

FIG. 6

EP 4 641 567 A1

**Description**

OBJECT OF THE INVENTION

The present system and method for analyzing the voice signal on telephone calls allows to monitor and evaluate the overall quality as part of a telecommunication service. It observes and assesses comprehensive quality attributes of telephonic conversations, incorporating several metrics of the conversational dynamics among participants, the technical acoustical fidelity of the transmitted signals, and paralinguistic aspects of the conversation within the voice signal. In order to provide an exhaustive evaluation, the framework uses statistical methodologies and machine learning models to analyze acoustic features, e.g., signal clarity, and paralinguistic cues, e.g., non-verbal elements within speech. The method is language independent, and its design accommodates multi-channel and multi-speaker telephonic interactions, and considers both, speech and non-speech segments. This evaluation encompasses factors related to the callers and the acoustic environment in which the call takes place, including the participants' environment and the transmission channel. This voice signal analytic method facilitates either online auditory monitoring, as offline assessment of the telecommunication service by area of interest (e.g. geographical regions, call centers, commuters).

The architecture of the voice signal analytic method comprises three distinct computational dimensions for metrics computation:

1. Conversational dynamic analysis, by means of dialogue-related metrics computation, with emphasis on the fluidity and coherence of dialogue across channels.
2. Acoustical fidelity assessment, by means of acoustic quality metrics computation, dedicated to the objective analysis of the signal clarity, intelligibility, and quality.
3. Paralinguistic cues interpretation, by means of paralinguistic metrics computation, responsible for identifying non-verbal elements and nuances present both within individual speech and within the broader context of conversation among different speakers.

Subsequent to individualized assessments, an interpretation layer is employed to analyze the gathered metrics and affix tags, thereby synthesizing evaluations of performance within the defined dimensions. Furthermore, a logical schema delineates inter-channel relationships within concurrent conversations, extending the interpretation to the full telephone call. The tallying of alarms, categorized according to established criteria reflecting application-specific performance indicators, adds quantitative insight. Optionally, a metadata-centric approach enriches the evaluation process by leveraging source-destination identifiers, thereby refining performance assessments and furnishing detailed insights into predefined areas of interest.

TECHNICAL FIELD

The invention belongs to the telecommunications technology sector, and more specifically to those technologies that monitor and evaluate the quality of phone calls.

BRIEF DESCRIPTION OF THE INVENTION

In the first aspect of the invention, a method of voice signal analytic on telephone calls based on acoustic quality, paralinguistic, and dialogue-related metrics is disclosed. The method of the present invention is applied to a multichannel voice signal corresponding to a telephone call between speakers and is language independent.

Thus, the method for voice signal analytic on telephone calls of the present invention comprises:

- a pre-processing stage, which comprises the following pre-processing steps:

  ○ converting the voice signal to an uncompressed format signal;
  ○ dividing the uncompressed format signal into single channel streams;
  ○ generating (diarization process), for each single channel stream and from the uncompressed format signal, a temporal map in seconds that delineates audio segments attributed to each speaker;
  ○ generating (transcription process), for each single channel stream and from uncompressed format signal, a text containing spoken words of each speaker;

- a metrics computation stage, which comprises the following computational steps:

  ○ computing dialogue-related metrics over the temporal map and the text;

○ computing acoustic quality metrics over the single channel streams;
○ computing paralinguistic metrics over the single channel streams;
○ computing combined metrics by combining the dialogue-related metrics, the acoustic quality metrics, the paralinguistic metrics and the single channel streams;

• a tagging stage, which comprises:

○ tagging each single channel stream based on the combined metrics, the dialogue-related metrics, the acoustic quality metrics and the paralinguistic metrics to obtain at least two tags, one tag per channel;
○ merging the tags to obtain a final tag by telephone call.

In preferred embodiment, the step of computing the acoustic quality metrics is repeated for all segments of the audio segments.

In another embodiment, the method further comprises establishing alarms for atypical voice signals by leveraging insights gleaned from the final tag, which are the interpretation of the metrics. Optionally, the method further comprises generating comprehensive reports on behaviors observed within the telephone calls.

In another embodiment, the step of converting the voice signal to an uncompressed format signal comprises decoding the encoded telephonic line and generating a Linear Pulse Code Modulation "LPCM" uncompressed format signal.

In another embodiment, the step of generating the temporal map is performed by a Speaker Diarization "SD" engine.

In another embodiment, the step of generating the text is performed by a Speech-to-Text "STT" engine.

In another embodiment, the dialogue-related metrics at least comprise: the overall duration of the voice signal "*dur*", the length of time the speaker spends talking "*durspk*"; the periods of silence throughout the conversation "*sil*"; the response times *"restime";* the wait times "*wait*"; and, the duration of each speaker's turn *"spkturn"*.

In another embodiment, the acoustic quality metrics at least comprise: the Signal-to-Noise Ratio "*SNR*"; the Signal-to-Reverberation Modulation Ratio "*SRMR*"; the speech level *"speech level"*; the saturation *"saturation";* the tone presence "tones"; and, the microcuts *"microcuts".*

In another embodiment, the paralinguistic metrics at least comprise: the intonation patterns *"intonation"* and speaking rate *"speaking rate".*

In another embodiment, the combined metrics at least comprise: the Speech mask confidence *"confidence";* the quality index *"qindex";* the speaker overlap index *"spkoverlap";* and, the acoustic artifacts *"artifacts".* The single channel streams are further processed with a Voice Activity Detection (VAD) engine, which generates a set of discrete audio segments, with initial and end timestamps, corresponding to the speech and non-speech areas within the single channel streams. In this particular case, the speech mask confidence is determined by the percentage of time in seconds the timestamps from the VAD and from the temporal map differ with respect to the overall duration of the voice signal. The Voice Activity Detection (VAD) engine is a second expert that provides how to segment the audio into voice and non-voice segments, being the diarizador engine the first expert firstly provides the segmentation of the audio into voice and non-voice segments generating initial and end timestamps.

In a second aspect of the invention, a system for voice signal analytic on telephone calls is disclosed. The telephone call comprises a voice signal between speakers. The system comprises a first pre-processing module, a second metrics computation module, a third tagging module, a fourth alarming module, and a fifth reporting module that provides a final report of the telephone call. The system, and thus, all its modules, is configured to carry out the method of the first aspect of the invention.

BRIEF DESCRIPTION OF THE FIGURES

In order to help with a better understanding of the features of the invention and to complement this description, the following figures are attached as an integral part of the same, by way of illustration and not limitation:

FIG. 1 shows a block diagram of the pre-processing module which encompasses four functionalities for taking the voice signal from the telephonic line, if the processing is online, or a local folder, if the processing is offline, to prepare the conditions for the next computation of metrics.

FIG. 2 shows a block diagram of the metrics computation module wherein the metrics related to the dialogue, acoustic quality and paralinguistic aspects are computed over the voice signal.

FIG. 3 shows a block diagram of the computation of the *confidence* metric.

FIG. 4 shows a block diagram of the tagging process where the metrics corresponding to a voice signal are interpreted according to their values and various tags are associated to the voice signal for each channel and the entire call.

FIG. 5 shows a block diagram of the process for categorizing alarms and counting the number of voice signals that encompass each alarm category from the whole group of calls under analysis.

FIG. 6 shows the block diagram of the full system for voice signal analytic on telephone calls.

DETAILED DESCRIPTION OF THE INVENTION

A. Preprocessing

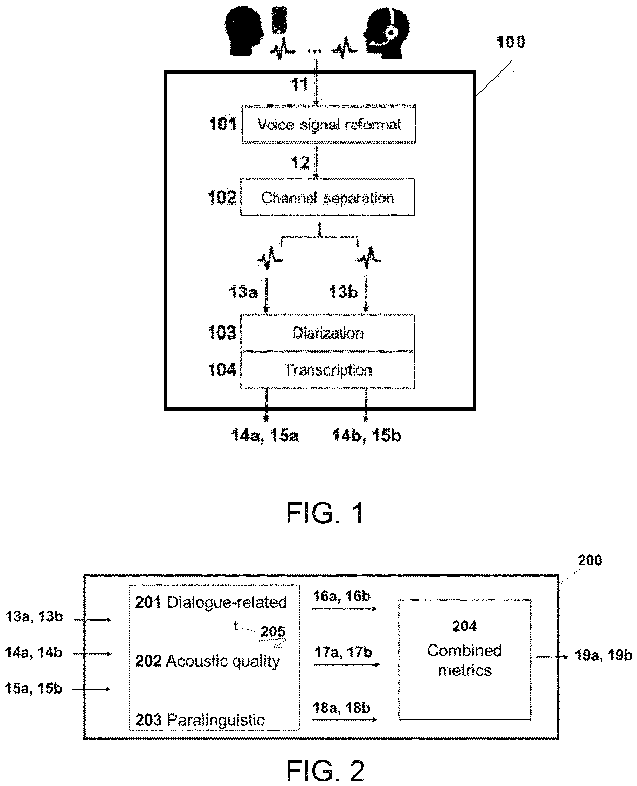

An embodiment of a preprocessing module **100** of the present invention will now be described with reference to FIG. **1.** The pre-processing module **100** facilitates the auxiliary tools required for the subsequent computation of voice signal metrics. It encompasses converting the voice signal to a convenient uncompressed format signal **101.** Subsequently, the voice signal, that can be presented in a two-channel format, is divided into two independent streams for subsequent analysis **102.** The following steps of this module focus on voice signal diarization **103,** generating a temporal map in seconds that delineates the voice signal segments attributed to each speaker. Lastly, the transcription **104** furnishes the text associated with the voice signal, along with corresponding timestamps.

A1. Signal reformat and channel separation

In this phase of the process, the encoded voice signal sourced directly from the telephonic line is the initial input **11,** typically featuring a sampling rate of 8000 Hz and encoded using formats such as G729, GSM, u-law, a-law, or similar. The encoded voice signal undergoes a decoding process specific to its encoding format, transforming it into a LPCM uncompressed form **12.** Given that the voice signal may be in a two-channel format, a subsequent step involves channel separation, dividing the voice signal into two distinct single channel streams **13a, 13b.** These streams retain the original sampling rate of 8000 Hz and are in LPCM. The outcome of this stage is the decoded telephonic voice signal comprising two separate single channel streams, each single channel stream is ready for further processing or analysis, while maintaining the integrity of the original voice signal content.

A2. Diarization

In the following, the method undertakes the diarization process of each single channel stream, that often encompass conversations involving multiple speakers. The diarization process generates a temporal map in seconds that delineates the audio segments attributed to each speaker. This process is often performed by a Speaker Diarization (SD) engine. The outputs of this phase encompass the temporal map (diarization) **14a** and **14b,** delineated into discrete audio segments corresponding to individual speakers. In these audio segments there is a set of timestamp pairs that encapsulates the audio segments where a solitary speaker is active. Additionally, the audio segments can be accompanied by speaker identification labels denoting the speaker's identity or a distinctive identifier, which is known as Speaker Identity Attribution, and is optionally included in the diarization process.

A3. Transcription

Subsequently, the method carries out the transcription process of each single channel stream. The transcription process is often performed by a Speech to Text (STT) engine. The transcription procedure applies automatic speech recognition techniques to convert the speech into text. Optionally, speaker adaptation techniques can be employed to further refine the transcription based on identified speaker characteristics. The output of the transcription process yields text transcriptions **15a** and **15b** of the two distinct single channel streams **13a** and **13b,** wherein each segment is transcribed into text and attributed to the respective speaker.

B. Metrics computation

An embodiment of a metrics computation module **200** of the present invention will now be described with reference to FIG. **2.** The process of computing metrics encompasses various stages related to type of information: dialogue-related metrics **201,** metrics of the acoustic quality **202,** and paralinguistic metrics **203.** The inputs of this embodiment for metrics computation are the single channel streams **13a** and **13b,** the corresponding temporal map (diarization) **14a** and **14b** with the timestamps of the speech segments of individual speakers, and the corresponding text transcription **15a** and **15b.** Initially, metrics are computed over the single channel stream capturing various measurable attributes. The resulting dialogue-related metrics **16a-16b,** quality metrics **17a-17b,** and paralinguistic metrics **18a-18b,** may include amplitude, frequency, and duration parameters, and other characteristics that provide insights into the properties of the waveform. Subsequently, these metrics **(16a, 17a, 18a** and **16b, 17b, 18b)** are post-processed by aggregation, manipulation, or analysis of the individual metrics to generate new combined metrics **19a** and **19b** that offer a more comprehensive understanding of the overall quality of the telephone call **2.** By leveraging the information gleaned from the dialogue-related metrics **16a-16b,** quality metrics **17a-17b,** and paralinguistic metrics **18a-18b,** the computation of combined metrics **19a** and **19b** facilitates deeper analysis and interpretation, enabling more informed decision-making in various applications. The quality metrics **17a, 17b** are obtained every one or more seconds, along with a general record of the entire single channel stream, typically averaging or summing the records obtained in these intervals. A single value for the entire single channel stream is obtained for dialogue-related metrics **16a-16b** and paralinguistic metrics **18a-18b.** Then, a selection of the metrics **16a, 17a, 18a** and **16b, 17b, 18b** are used for computing the combined metrics **19a, 19b,** which are also a single value by metric corresponding to the entire single channel streams **13a, 13b.** The computation of the metrics **16a, 17a, 18a, 19a** and **16b, 17b, 18b 19b** are detailed described in the following paragraphs.

Dialogue-related metrics computation **201** provide a comprehensive understanding of the flow and interaction within the telephone call **2.** They shed light on how the telephone call **2** progresses and how speakers engage with each other and enable to identify patterns and areas for improvement in communication dynamics. The dialogue-related metrics are computed over the two distinct single channel streams **13a** and **13b** and use the corresponding temporal map (diarization) **14a, 14b** as guide of the segments with speech and non-speech. The dialogue-related metrics include, but are not tied to:

- The overall duration of the single channel stream "*dur*",
- The length of time the speaker spends talking *"durspk"*,
- The periods of silence throughout the conversation *"sil"*,
- Response times *"restime"*,
- Wait times *"wait"*,
- Duration of each speaker's turn *"spkturn"*.

The resulting output of this computation is a set of dialogue-related metrics **16a, 16b.**

To compute the mentioned metrics, the timestamps in seconds with the discrete segments with speech and non-speech are employed. First, *"dur"* is obtained as the full number of seconds of the single channel stream **(13a** or **13b).** Then *"durspk"* is the sum of speech segments determined by the diarization process, while *"sil"* is the sum of non-speech segments determined by the corresponding diarization **14a** or **14b.**

*"Restime"* are the minimum and maximum values of the set of segments in seconds where a speech segment of one single channel stream (e.g. **13a)** is below or overlaps a speech segment of the other single channel stream (e.g. **13b).** *"Wait"* are the minimum and maximum values of the set of segments in seconds where the start of the following speech segment is over certain amount of time (e.g. more than 5 seconds). "*Spkturn"* are the minimum and maximum values of the set of speech segments of the single channel stream **(13a** or **13b)** in seconds.

Acoustic quality metrics computation **202** assess the technical aspects of a telephone call **2,** offering insights into the fidelity and clarity. They are computed over the single channel streams **13a** and **13b.** The quality metrics include, but are not tied to:

- Signal to Noise Ratio "*SNR*",
- Signal to Reverberation Modulation Ratio "*SRMR*",
- Speech level *"speech level"*,
- Saturation *"saturation"*,
- Tone presence *"tones"*,
- Microcuts *"microcuts"*,
  all previous quality metrics are computed in speech segments.
- Average noise power *"noise power"*,

computed in non-speech segments.

The definition of speech and non-speech segments are taken from the temporal map (diarization process). The resulting output of this computation is a set of quality metrics **17a, 17b.**

First, *SNR* and *SRMR* collectively indicate the level of distortion and acoustic quality in the single channel stream **(13a** or **13b).** As previously mentioned, the temporal map (diarization process) **14a** and **14b** are employed for establishing the audio segments where compute the power of speech (i.e. those corresponding to speech in the diarization), and the power of noise (i.e. those corresponding to non-speech in the diarization). Then, the value of *SNR* is computed as follows:

$$SNR = 10 * log_{10} \frac{P_{Xspeech}}{P_{Xnoise}},$$

where $P_{Xspeech}$ is the power of speech segments and $P_{Xnoise}$ is the power of non-speech segments computed as $P = \frac{1}{N} \sum_{n=0}^{N-1} |X(n)|^2$ with $N$ the number of samples of the corresponding single channel stream (13a or 13b) segment, and $X(n)$ the samples.

The SRMR measures the quality of a single channel stream by quantifying the balance between the speech segments and its reverberant components. First, the speech segments of the single channel stream **(13a or 13b)** are divided into short-time frames and the reverberant components are estimated for each frame using a model-based approach, such as a room impulse response estimation or blind source separation. The modulation spectra of both, the original speech segments and the reverberant components, are then extracted using a filterbank or a similar method. Finally, the metric is calculated as the ratio of the modulation energy of the speech segments to the modulation energy of the reverberant components:

$$SRMR = \frac{\sum_{k=1}^{4} \bar{\varepsilon}(k)}{\sum_{k=5}^{K^+} \bar{\varepsilon}(k)},$$

where $\underline{\varepsilon}$ is the average per modulation band energy. A higher value indicates a stronger presence of speech relative to reverberation, thus reflecting better quality with reduced reverberation effects.

*Speech level* represents the volume of the speech segments referred to full scale known as dBFS (dB Full-Scale), where 0 dBFS represents the root mean square (RMS) level of a full scale sinusoidal. Working with 16 bits quantification, the full-scale value is $2^{15}$. This is computed as follows:

$$speech\ level = 10 * log_{10} \frac{P_{Xspeech}}{2^{29}},$$

where $P_{Xspeech}$ is the power of speech segments previously defined in SNR metric, and $2^{29}$ is the power of a full-scale sinusoid.

Acoustic artifacts may impact the quality of the single channel stream, including *saturation, tones,* and *microcuts.* These artifacts have the potential to affect the overall listening experience by introducing distortion, interference, or interruptions. Detection of these artifacts enables proactive measures to mitigate their effects and enhance the quality of telephone calls.

*Saturation* detection method aims to identify instances where the single channel stream reaches its maximum level, potentially causing distortion. It starts by initializing buffers for the detection process and then preprocesses the segment by subtracting the mean of the single channel stream. Subsequently, it applies various saturation criteria, including detecting local maxima, counting the number of maxima within each frame, and clustering to remove false positives. Additionally, it computes ratios between samples at high and low zones of the histogram and ratios between energy at high and low frequencies. Based on certain conditions and thresholds empirically set according to the data, the function decides whether a frame is saturated or not.

*Tones* are obtained through a Linear Predictive Coding (LPC) analysis. It begins by emphasizing high-frequency components to distinguish tones from other typical acoustic features in speech, such as the fundamental frequency F0. Thanks to this analysis, the LPC coefficients are obtained and they allow the representation of the spectral envelope of the single channel stream. The LPC coefficients are used to derive the prediction filter in the Z-domain and this filter helps in predicting future samples of the signal based on past samples. The denominator of this prediction filter in the Z-domain is what we call LPC polynomial, derived from the LPC coefficients, and its roots provide valuable insights into the signal's spectral properties. The roots of the LPC polynomial allow to detect the presence of narrowband components (tones) based on their module and bandwidths. If a root meets certain criteria empirically set according to the data, it is potentially a tone. Then, the method checks if these tones correspond to standard Dual Tone Multi-Frequency (DTMF) values (697, 770, 852, 941, 1209, 1336, 1477, 1633 Hz) within a small tolerance. Detected DTMF tones are marked, and their conjugate roots are also labeled accordingly. Finally, the method aggregates the detection results to generate binary flags indicating the presence of DTMF tones and other tones.

*Microcuts* are extremely short segments, in the order of milliseconds, where the voice signal is interrupted or lost. This issue may correspond to particular acoustic distortions observed in recorded telephone data, similar to packet loss or telephone service coverage loss, that might occur during the telephone call **2** is in progress or when it is recorded. *Microcuts* metric is computed based on the energy histogram of the speech segments. The energy of each frame is calculated, and a mean average filter is applied to smooth the energy values. Subsequently, the method computes the difference in energy between adjacent frames and extracts significant differences based on a threshold (*th*) empirically set according to the data. A histogram of these significant differences is constructed with bins ranging from [0,20], or alternative values according to the data. The metric *microcuts* is then calculated as the sum of the normalized histogram values within a specific range of bins following the rule:

$$microcuts = \begin{cases} 1 & if\ microcuts > th \\ 0 & otherwise \end{cases}$$

Furthermore, the analysis of the average power of non-speech segments, called average noise power "noise power", helps identify the persistent noise floor. This metric provides valuable information about the ambient noise throughout the telephone call 2, and is computed as follows:

$$noise\ power = 10 * log_{10}(\frac{1}{M} \sum_{m=1}^{M} P_{X_{noise}}(m)),$$

where $P_{Xnoise}(m)$ is the power of the m-th non-speech segment and M the number of non-speech segments detected.

Paralinguistic metrics computation **203** offer valuable insights into the non-verbal aspects. These metrics capture subtle nuances of the prosody at speaking, that contribute to the overall expression and communication style. They are computed over the single channel stream **13a** and **13b.** Paralinguistic metrics include, but are not tied to:

- Intonation patterns *"intonation"*,
- Speaking rate *"speaking rate"*.

The resulting output of this metrics computation is a set of paralinguistic metrics **18a, 18b.**

*"Intonation"* contains an evolution of the fundamental frequency, by providing an overview of vocal inflections and variations of intonation throughout the whole conversation. Initially, it calculates the fundamental period of the single channel streams **13a** and **13b** as T0, which is the inverse of the fundamental frequency F0. Then, it identifies the unvoiced period, namely the periods without F0, as anchors and interpolates the fundamental frequency values between these anchors to obtain a smoother contour. Next, the method calculates the differences between consecutive interpolated T0 values $\Delta T0$ and obtains a histogram of these differences with a specified number of bins and range. After optionally segmenting these differences into tokens, it computes the centrality percentages of these histograms and the median centrality as the intonation value. This *"intonation"* value provides insight into the overall F0 variation or intonation pattern exhibit in the single channel stream. This metric describes the variation of the F0 in a speech segment. High values indicate low variations, so monotone speech, while low values indicate wider variations in the intonation of the speaker.

*"Speaking rate"* of the speaker quantifies the number of syllables uttered per second as the following:

$$speaking\ rate = \frac{number\_syllabes}{durspk},$$

where the number of syllables is computed by using the text transcription aligned to the single channel stream. This metric provides insights into the pace and fluency of speech. In this case, lower values than 3-4 syllables per second indicate slow speech, while higher values indicate fast speech. By analyzing these paralinguistic metrics, analysts can gain a deeper understanding of the emotional tone, emphasis, and engagement levels in spoken communication.

Combined metrics computation **204** provide additional insights at generating more metrics **19a, 19b** from the previously computed metrics **16a,16b,17a,17b,18a,18b,** and the side information provided by the diarization **14a, 14b.** Essentially, they are analyzing the entire single channel stream. This step marks their initial approach toward understanding the client's key performance indicators (KPIs). These combined metrics are typically represented as binary (indicating presence or absence) or as probabilities (ranging from 0 to 1). Combined metrics include, but are not tied to:

- Speech mask confidence *"confidence"*,
- Quality index *"qindex"*,
- Speaker overlap index *"spkoverlap"*,
- Acoustic artifacts *"artifacts"*.

The resulting output of this computation is a set of combined metrics **19a, 19b.**

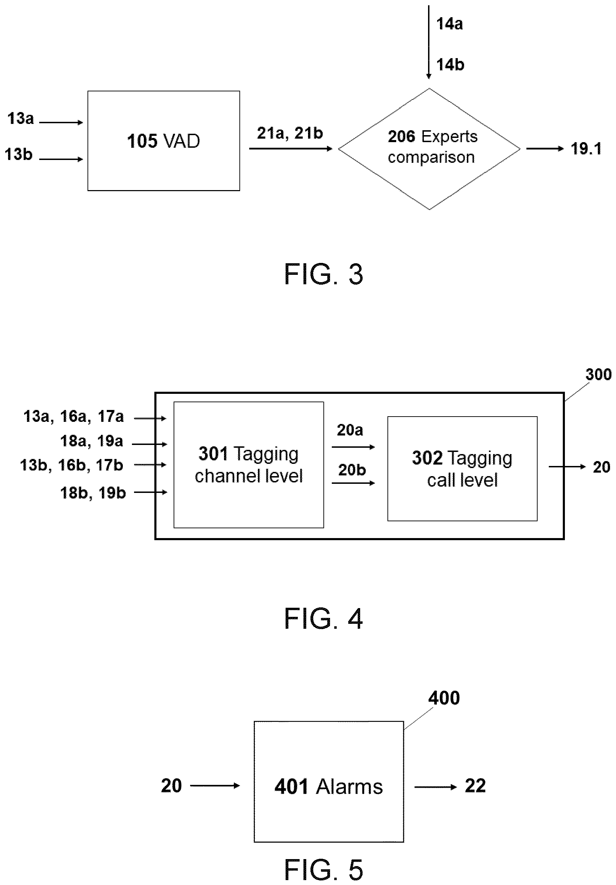

*Confidence,* reflects the reliability of the segmentation established by the accuracy of the diarization process. This is crucial for assessing the reliability of obtained metrics (combined metrics, dialogue-related metrics, quality metrics, paralinguistic metrics), especially those that depend on the segmentation in speech and non-speech segments such as the acoustic quality metrics. To compute this metric (see FIG. **3)** the single channel streams **13a, 13b** are processed with a Voice Activity Detection (VAD) method **105,** usually performed by a VAD engine, that outputs a set of discrete segments **21a, 21b,** with initial and end timestamps, corresponding to the speech and non-speech areas within the single channel stream. The set of timestamps from the VAD **(21a, 21b)** and from the temporal map **(14a, 14b)** from the diarization process are considered as two different experts. Thus, they are compared **206** among them and the Speech Mask Confidence "SMC" is determined by the percentage of time in seconds they differ with respect of "*dur*", considering a permissible window of error in seconds that can be adjusted according to the application.

*"Qindex"* is a composite metric used to assess the overall technical quality of the single channel stream by drawing upon several quality factors expressed by the following metrics in **17a, 17b:** *SNR, SRMR, speech level, saturation, tones, microcuts,* and *noise power.* To compute the *qindex* metric, first the quality metrics **17a, 17b** are transformed into their probabilistic representations and then they are combined by means of a weighted sum:

$$quindex = N * ft(SNR) + R * ft(SRMR) + I * ft(speech\ level) + A * (ft(saturation) + ft(tones) + ft(microcounts)) + Ne * ft(noise\ power),$$

where *N, R, I, Ne,* and *A* represent the predefined weights of the sum, indicating their relative importance in determining the overall quality. The function *ft(x)* is a transformation that normalizes the metrics **17a, 17b** to a Gaussian distribution. It builds a transformation model using a set of single channel streams as training data and applies it to both training and testing data. The Gaussianization is obtained by mapping data quantiles to a standard normal distribution. The function outputs the transformed testing data and their cumulative distribution function (CDF), streamlining the process of preparing the **17a, 17b** metrics for mixing among them. Thus, *"qindex"* provides a holistic evaluation of the quality by considering various aspects that can affect the listener's experience, including clarity, presence of distortions or artifacts, and overall fidelity. It offers a convenient way to quantify and compare the quality of different single channel streams.

*"Spkoverlap"* identifies instances of overlap, indicating interruptions between speakers. To obtain this metric the minimum value of the metric *"restime"* is weighted with the *confidence* as presented in the following:

$$spkoverlap = \min\ (restime) * \frac{confidence}{100}$$

Finally, the *"artifacts"* metric provides an overall insight about the presence of signal distortions. This is computed as:

$$artifacts = saturation\ + tones\ + microcuts$$

C. Tagging

During the tagging stage **300,** single channel streams **13a, 13b** undergo tagging, initially by channel **301** and subsequently by call **302** as presented in FIG. 4. The tags aid in interpreting the values of the metrics and correlating them with the client's key performance indicators (KPIs) of interest. Tagging rules are established based on reasonable thresholds of metric values, guided by the metric definition and its manifestation in the data. Initially, this process occurs at the channel level, namely a tag **20a** from the metrics **16a, 17a, 18a, 19a** corresponds to the single channel stream **13a** and another tag **20b** from the metrics **16b, 17b, 18b, 19b** corresponds to the single channel stream **13b.** Then, both channel tags **20a, 20b** are merged to create a final tag at the call level, namely a tag **20** for the whole telephone call **2.**

At the channel level, tagging labels single channel streams are:

- "General" is activated when a metric value exceeds or falls below the mean by more than two standard deviations. The mean and standard deviation values are computed for each metric **16a, 17a, 18a, 19a, 16b, 17b, 18b, 19b** considering the full group of single channel streams under analysis.
- "Empty" denotes instances where the text transcription **15a, 15b** exhibit negligible content or *"durspk"* is less than the 5% of *dur.*
- "Noisy" indicates poor *SNR* (< 5dB).
- "Distortion" indicates significant number of acoustic artifacts, namely when *"artifacts"* exceeds the 10% of time of *"dur".*
- "Quality" indicates low *"qindex"* < 50.

- "Background noise" indicates high noise pattern in the non-speech segments determined by the *"noise power"* > -10dB.
- "Interruptions" when the *"spkoverlap"* > 4 seconds.
- "Emotions" when *"intonation"* < 40.
- "Slow" when *"speaking rate"* < 2 syllables per seconds.
- "Fast" when *"speaking rate"* > 8 syllables per seconds.

At the call level, further tagging occurs to encompass broader call-related phenomena, these include, but are not tied to:

- "General call" when one or both single channel streams have the tag "General" activated,
- "Unanswered call" is applied when one single channel stream remains empty, i.e., has the "Empty" tag, while the other does not.
- "Empty call" when both single channel streams lack substantial content, i.e., both have the "Empty" tag.
- "Noisy call" tag is indicative of overall poor quality throughout the call duration, i.e., when both single channel streams have activated one or more of the following tags: "Noisy", "Distortion", "Quality", or "Background noise".
- "Interrupted conversation" tag when one or both single channel streams have activated the tag "Interruptions"
- "Monotone conversation" when "Slow" tag is activated in one or both single channel streams, and there is not activated the "Emotions" tag.

"Emotional conversation" when "Emotions" tag is activated in one or both single channel streams.

D. Set alarms

Following the tagging process, the system proceeds to establish alarms for atypical voice signals (or telephone calls), see FIG. **5.** The alarm stage **400** is dedicated to delineating the KPIs by leveraging insights gleaned from the tags **20,** which are the interpretation of the metrics. Moreover, metadata furnished by the client pertaining to each telephone call **2** is incorporated. These alarms are classified into four fundamental categories: general, agent protocol, technical anomalies, and campaign objectives. So, the output of this process is a list of the alarm categories with the corresponding number of voice signals that have those alarms **22.**

Noteworthy examples of them include but are not tied to:

- General metric alarms according to the tag "General"
- Agent protocol:

  ○ Interruptions
  ○ Speech mannerisms (monotone or fast speech)

- Technical issues:

  ○ Empty outgoing/incoming calls
  ○ Technical call quality
  ○ Distortions and noises

- Campaign objectives:

  ○ Satisfaction
  ○ Emotional activity

E. Reporting

Finally, and optionally, the reports are aggregated and presented in an interactive dashboard. The reporting phase **500** involves generating comprehensive reports on the behaviors observed within client-specific areas of interest, including call centers, switches, recorders, campaigns, and agents. Inputs for this process include the metadata related to the telephone calls, along with the metrics **16a, 17a, 18a, 19a, 16b, 17b, 18b, 19b,** tags **20a, 20b, 20,** and alarms **22** derived from the analysis of the voice signals. The reports are meticulously crafted to outline behaviors and facilitate comparisons among different elements, enabling a clear depiction of service functionality and the identification of any potential issues. The reports can be structured into distinct categories, for instance:

- Global service metrics: This category provides a comprehensive summary of the metrics from both agent and client channels. The summary is based on the quantity of alarms detected for each type, including dialogue-related metrics, acoustic quality metrics, and paralinguistic metrics.
- Comparison between centers and switches: Reports in this category offer a comparative analysis of alarms quantified across different call centers and switches. Detailed breakdowns of alarm types are provided to facilitate a deeper understanding of performance variations.
- Recorder-based quality analysis: Focusing specifically on acoustic quality-related alarms, this category evaluates the technical quality of recorded voice signals. Given the recorder's influence in this aspect, the analysis aims to identify and address any issues impacting voice signal (or telephone call) fidelity.
- Agent-specific comparison: Metrics related to agent protocol, encompassing paralinguistic and dialogue-related aspects, are examined in this category. By analyzing agent-specific data, insights into individual performance and adherence to protocol standards are gained.
- Temporal evolution analysis: This category involves a longitudinal study of alarm quantities over varying time periods, including days, weeks, and months. The analysis spans across centers, switches, agents, and other relevant factors, providing insights into trends and patterns over time.

F. System for voice signal analytic on telephone calls

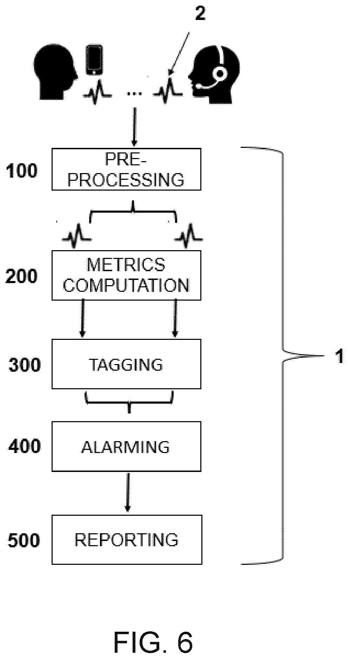

The whole system **1** for implementing the analysis of a given telephone call **2** or a collection of telephone calls, can be configured according to the use-case requirements and goals and is delineated in FIG. **6.** The system **1** of the present invention comprises a first pre-processing module **100,** a second metrics computation module **200,** a third tagging module **300,** a fourth alarming module **400,** and finally an optionally fifth reporting module **500** that provides a final report of the telecommunication service.

For a group of telephone calls, or a single telephone call **2,** the first pre-processing module **100,** described in FIG. **1,** proceeds to reformat **101** and obtains the single channel stream **102.** If the system operates offline the voice signals are in a local folder, but if the system operates online the voice signals comes directly from the telephone line. Additionally, the diarization **103** and transcription **104** provide useful information of the single channel streams under analysis. The second metrics computation module **200,** described in FIG. **2,** computes the metrics of the single channel streams in the dimensions of the dialogue-related aspects **201,** the acoustic quality **202,** and paralinguistic aspects **203** of the telephone conversation, and finally a combined metrics dimension **204** computes a set of metrics based on the previous. The third tagging module **300,** described in FIG. **4,** interprets the metrics performance for each single channel stream included in the conversation **301,** and then links up the results of the entire telephone call **302.** The fourth alarming module **400,** described in FIG. **5,** count and categorizes the number of voice signals with alarms **401.** Finally, the fifth reporting module **500** is optional and organizes the analysis by region/area according to a metadata provided by the telecommunication service provider in charge of telephone calls. It creates reports of results that include the results of the quality performance by region, call center, recorder, commutator, etc.

**Claims**

1. A method for voice signal analytic on telephone calls, wherein a telephone call comprises a voice signal between speakers; the method comprises:

    • a pre-processing stage (100), which comprises the following pre-processing steps:

        ○ converting (101) the voice signal (11) to an uncompressed format signal (12);
        ○ dividing (102) the uncompressed format signal (12) into single channel streams (13a,13b);
        ○ generating (103), for each single channel stream and from the uncompressed format signal, a temporal map (14a, 14b) in seconds that delineates audio segments attributed to each speaker;
        ○ generating (104), for each single channel stream and from uncompressed format signal, a text (15a,15b) containing spoken words of each speaker;

    • a metrics computation stage (200), which comprises the following computational steps:

        ○ computing (201) dialogue-related metrics (16a, 16b) over the temporal map (14a, 14b) and the text (15a, 15b);
        ○ computing (202) acoustic quality metrics (17a, 17b) over the single channel streams (13a, 13b);
        ○ computing (203) paralinguistic metrics (18a, 18b) over the single channel streams (13a, 13b);

○ computing (204) combined metrics (19a, 19b) by combining the dialogue-related metrics (16a, 16b), the acoustic quality metrics (17a, 17b), the paralinguistic metrics (18a, 18b) and the single channel streams (13a, 13b);

• a tagging stage (300), which comprises:

○ tagging (301) each single channel stream (13a, 13b) based on the combined metrics (19a, 19b), the dialogue-related metrics (16a, 16b), the acoustic quality metrics (17a, 17b) and the paralinguistic metrics (18a, 18b) to obtain at least two tags (20a, 20b), one tag per channel;
○ merging (302) the tags (20a, 20b) to obtain a final tag (20) by telephone call (2).

2. The method for voice signal analytic on telephone calls of claim 1, the step of computing the acoustic quality metrics (17a, 17b) is repeated (205) for all segments of the audio segments.

3. The method for voice signal analytic on telephone calls of claim 1, wherein the method further comprises establishing (400) alarms for atypical voice signals by leveraging insights gleaned from the final tag (20).

4. The method for voice signal analytic on telephone calls of claim 3, wherein the method further comprises generating (500) comprehensive reports on behaviors observed within the telephone calls (2).

5. The method for voice signal analytic on telephone calls of claim 1, wherein the step of converting (101) the voice signal to an uncompressed format signal comprises decoding the encoded telephonic line (11) and generating a Linear Pulse Code Modulation "LPCM" uncompressed format signal (12).

6. The method for voice signal analytic on telephone calls of claim 1, wherein the step of generating (103) the temporal map is performed by a Speaker Diarization "SD" engine.

7. The method for voice signal analytic on telephone calls of claim 1, wherein the step of generating (104) the text is performed by a Speech-to-Text "STT" engine.

8. The method for voice signal analytic on telephone calls of claim 1, wherein the dialogue-related metrics (16a, 16b) at least comprise:

• an overall duration of the voice signal "*dur*";
• a length of time the speaker spends talking "*durspk*";
• periods of silence throughout the conversation "*sil*";
• response times *"restime";*
• wait times "*wait*"; and,
• a duration of a turn of each speaker turn *"spkturn".*

9. The method for voice signal analytic on telephone calls of claim 1, wherein the acoustic quality metrics (17a, 17b) at least comprise:

• Signal-to-Noise Ratio "*SNR*";
• Signal-to-Reverberation Modulation Ratio "*SRMR*";
• speech level *"speech level*";
• saturation *"saturation";*
• tones presence "*tones*"; and,
• microcuts *"microcuts".*

10. The method for voice signal analytic on telephone calls of claim 1, wherein the paralinguistic metrics (18a, 18b) at least comprise:

• intonation patterns *"intonation";* and,
• a speaking rate *"speaking rate".*

11. The method for voice signal analytic on telephone calls of claim 1, wherein the combined metrics (19a, 19b) at least comprise:

- a Speech Mask Confidence *"confidence"*;
- a quality index *"qindex"*;
- a speaker overlap index *"spkoverlap"*; and,
- acoustic artifacts *"artifacts"*.

12. The method for voice signal analytic on telephone calls of claim 11, wherein the single channel streams (13a, 13b) are further processed with an additional and independent Voice Activity Detection "VAD" engine (105), which generates a set of discrete audio segments (21a, 21b), with initial an end timestamps, corresponding to the speech and non-speech areas within the single channel streams (13a,13b).

13. The method for voice signal analytic on telephone calls of claim 12, wherein the Speech Mask Confidence *"confidence"* (19.1) is determined (206) by the percentage of time in seconds the timestamps from the VAD (21a, 21b) and form the temporal map (14a, 14b) differ with respect of the overall duration of the voice signal.

14. A system (1) for voice signal analytic on telephone calls, wherein a telephone call (2) comprises a voice signal between speakers; the system comprises a first pre-processing module (100), a second metrics computation module (200), a third tagging module (300), a fourth alarming module (400), and a fifth reporting module (500) that provides a final report of the telephone call; the system is configured to carry out the method of claims 1 to 13.

FIG. 1

FIG. 2

FIG. 3

FIG. 4

FIG. 5

FIG. 6

Europäisches
Patentamt

European
Patent Office

Office européen
des brevets

# EUROPEAN SEARCH REPORT

**Application Number**

EP 24 38 2457

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/071206 A1 (GAINSBORO JAY L [US] ET AL) 29 March 2007 (2007-03-29) <br> * paragraphs [0002], [0035] - paragraph [0038]; figures 1,7-14, 18, 19 * <br> * paragraph [0040] - paragraph [0046] * <br> * paragraph [0094] - paragraph [0097] * <br> * paragraph [0099] - paragraph [0100] * <br> * paragraph [0122] - paragraph [0127] * <br> * paragraph [0136] - paragraph [0148] * <br> * paragraphs [0166], [0178] - paragraph [0186] * <br> * paragraph [0194] - paragraph [0199] * <br> * paragraphs [0209], [0210], [0225] * | 1-14 | INV. <br> G10L25/60 <br> G10L25/63 <br> G06F40/10 <br> G06F40/20 <br> G06F40/30 <br> G10L25/87 |
| X <br><br> A | US 9 672 825 B2 (SESTEK SES VE ILETISIM BILGISAYAR TEKNOLOJILERI SANAYI VE TICARET ANON) 6 June 2017 (2017-06-06) <br> * column 2, line 19 - column 3, line 5 * <br> * column 3, line 44 - column 6, line 26 * <br> * column 6, line 66 - column 9, line 4 * <br> * column 9, line 61 - column 10, line 3 * | 1,7,8, 10,12,14 <br><br> 2-6,9, 11,13 |  |
| X | US 2017/084295 A1 (TSIARTAS ANDREAS [US] ET AL) 23 March 2017 (2017-03-23) <br> * paragraph [0018] - paragraph [0034] * <br> * paragraph [0039] - paragraph [0044] * <br> * paragraph [0049] - paragraph [0093]; figures 3A, 3B, 4A, 4B, 4C * | 1,14 | **TECHNICAL FIELDS SEARCHED (IPC)** <br> G10L <br> G06F |
| A | US 2022/115019 A1 (BRADLEY KIERSTEN L [US] ET AL) 14 April 2022 (2022-04-14) <br> * paragraphs [0016], [0060] - paragraph [0113]; figures 3-6B * <br> * paragraph [0109] - paragraph [0122] * | 1-14 |  |

The present search report has been drawn up for all claims

| Place of search | Date of completion of the search | Examiner |
|---|---|---|
| Munich | 18 October 2024 | Ebbinghaus, Stefanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 38 2457

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2024

| Patent document cited in search report | | Publication date | Patent family member(s) | | Publication date |
|---|---|---|---|---|---|
| US 2007071206 | A1 | 29-03-2007 | US | 10084920 B1 | 25-09-2018 |
| | | | US | 2007071206 A1 | 29-03-2007 |
| | | | US | 2016217807 A1 | 28-07-2016 |
| US 9672825 | B2 | 06-06-2017 | US | 2015350438 A1 | 03-12-2015 |
| | | | WO | 2014107141 A1 | 10-07-2014 |
| US 2017084295 | A1 | 23-03-2017 | NONE | | |
| US 2022115019 | A1 | 14-04-2022 | US | 2022115019 A1 | 14-04-2022 |
| | | | US | 2022115020 A1 | 14-04-2022 |
| | | | US | 2024331702 A1 | 03-10-2024 |

For more details about this annex : see Official Journal of the European Patent Office, No. 12/82